# EUROPEAN PATENT APPLICATION

(11) **EP 1 575 053 A1**
(43) Date of publication of application: **14.09.2005**
(21) Application number: 03810648.0
(22) Date of filing: 07.11.2003
(51) Int. Cl.: G11B 33/12

(54) **DISK DRIVE DEVICE**

(30) Priority: 08.11.2002 JP 2002325480
(71) Applicant: CITIZEN WATCH CO. LTD., Tokyo 188-8511 (JP)
(72) Inventor: TAKAHASHI, Shoji, c/o CITIZEN WATCH CO., LTD., Nishitokyo-shi, Tokyo 188-8511 (JP); WAKITA, Maki, c/o CITIZEN WATCH CO., LTD., Nishitokyo-shi, Tokyo 188-8511 (JP)
(74) Representative: Mounteney, Simon James
(86) International application number: PCT/JP2003/014194
(87) International publication number: WO 2004/042734

(57) **Abstract**

In a disc drive unit, a notch or opening is provided in a part of a lower case body, out of upper and lower case bodies containing therein a functional member, such as a spindle motor, whereby a part of the functional member, of which the vertical dimension cannot be reduced with ease, is exposed. Thus, a clearance dimension that is required when there are no holes, as well as the thickness dimension of the lower case body, is supposed to be a part of the vertical dimension that the functional member can utilize, whereby the overall vertical dimension of the unit is reduced without lowering the performance of the functional member.

## Description

### TECHNICAL FIELD

The present invention relates to a disc drive unit for driving an information recording disc, such as a compact disc (CD), digital video disc (DVD), etc., set therein, to read and write information.

### BACKGROUND ART

Some disc drive units are incorporated in host devices, such as notebook-sized personal computers. Since the host devices are already packed with many mechanisms with high density, however, such a disc drive unit comprises a case body, formed of upper and lower case bodies, and a disc tray that can be loaded into and unloaded from the case body, and is provided with a drive mechanism on the disc tray side. As the host devices are thinned and compactified, on the other hand, there is an urgent demand for the reduction of the dimensions, especially the thickness (vertical dimension), of the disc drive unit. Currently, for example, an average thickness of the disc drive unit of this type, including the upper and lower case bodies, is 12.7 mm, and is expected to be reduced by 3.2 mm, that is, to 9.5 mm.

In reducing the thickness of the disc drive unit, it is actually hard to reduce the respective thicknesses of materials that form the upper and lower case bodies and the thicknesses of various functional members that are incorporated in the disc drive unit, in view of the maintenance of its strength, functions, or performance. The functional members include, for example, a spindle motor for driving a loaded disc, a thread motor for moving a pickup unit in the radial direction of the disc, a cable that electrically connects the disc tray side and the case body side, etc.

The thicknesses of the materials that form the upper and lower case bodies should be about 0.4 mm and 0.5 mm, respectively. Although the vertical dimension of the spindle motor itself may possibly be reduced, moreover, it is difficult to reduce the overall vertical dimension of the entire motor, including a hammered portion at the proximal end of a shaft that is mounted on a thread chassis. Usually, furthermore, the thread chassis on which the spindle motor is mounted is supported on a lower cover through vibration-proof cushions, and the proximal end of the shaft may possibly move downward (as much as 0.3 mm).

If the vertical dimension of the thread motor is reduced, moreover, its output torque is influenced, and it is hard to obtain enough torque to move the pickup unit.

Further, a flexible connecting body, such as an FPC (flexible printed circuit) or FFC (flexible flat cable), is used as the cable that electrically connects the disc tray side and the case body side. This flexible connecting body is turned over so as to be adaptive to the loading and unloading of the disc tray as it is mounted in the case body. One end of the connecting body is connected to a case-body-side connector (mounted on a sub-circuit board), and the other end is connected to a disc-tray-side connector (mounted on a main circuit board). However, the flexible connecting body has stiffness such that its repulsive force is enhanced and inevitably pushes up the disc tray side if it is turned over with an undue curvature. In some cases, therefore, the disc may be skewed as it rotates, and its swing or oscillation may generate noise.

In a disc drive unit described in Japanese Patent Application Laid-Open No. 2000-21155, several openings are formed in those parts of a bottom plate (equivalent to the lower cover) which face a solenoid on a disc tray and a motor. They serve to diffuse heat from the functional members, including the solenoid, motor, etc., to the outside, and are not based on a technical idea to thin the disc drive unit as a whole. Further, a case body of a unit body is provided with no openings or notches, which indicates no intention for a reduction in thickness, either.

### DISCLOSURE OF THE INVENTION

The object of the present invention is to provide a disc drive unit, of which the whole body can be thinned without lowering the performance of functional members (including a motor for disc drive, motor for pickup unit movement, solenoid, cable for electrically connecting a disc tray side and a case body side, etc.) of the disc drive unit.

In order to achieve the above object, a disc drive unit according to a first aspect of the present invention comprises: a case body having at least a bottom face; a disc tray capable of holding a disc and moving between a disc driving position where the disc tray is housed in the case body and a disc loading position where the disc tray projects from the case body; functional members provided on the disc tray; and a lower cover attached to the disc tray so as to be situated between the functional members and the bottom face of the case body, in order to protect the functional members. Further, the case body has a notch or opening formed in that position of the bottom face thereof which faces the functional members when the disc tray is situated in the disc driving position.

The disc drive unit according to the first aspect may assume the following modes.

The lower cover has a notch or opening in that part thereof which faces the functional members.

The disc drive unit comprises a pickup unit having an optical head for recording or reproducing information to or from the disc, and one of the functional members is a thread motor for sliding the pickup unit in the radial direction of the disc.

The thread motor is situated in a position corresponding to the front edge portion of the lower case.

An output shaft of the thread motor is situated in front of the case body and coupled to a screw shaft for sliding the pickup unit by a transmission-connection mechanism composed of gears, and openings or notches are formed in those positions of the lower cover and the case body which face the transmission-connection mechanism.

The thread motor is a pulse motor coupled directly to a screw shaft for sliding the pickup unit.

The disc drive unit comprises a main circuit board attached to the case body, a sub-circuit board attached to the disc tray, and a flexible connecting body for electrically connecting the main circuit board and the sub-circuit board, and the functional member is the flexible connecting body when the disc tray is situated in the disc driving position and a bent portion thereof faces the notch or opening in the bottom face of the case body.

The flexible connecting body is a flexible printed circuit (FPC) or a flexible flat cable (FFC).

A disc drive unit according to a second aspect of the present invention comprises: a case body having at least a bottom face; a disc tray capable of holding a disc and moving between a disc driving position where the disc tray is housed in the case body and a disc loading position where the disc tray projects from the case body; functional members provided on the disc tray; a lower cover attached to the disc tray so as to be situated between the functional members and the bottom face of the case body, in order to protect the functional members; and a vibration-proof cushion for absorbing vibration generated as the disc is driven. Further, the case body has a.notch or opening for the evacuation of the functional members which move up and down as the disc oscillates, in that position of the bottom of the case body which faces the functional members.

The disc drive units according to the first and second aspects may assume the following modes.

The functional member is a spindle motor for driving the disc.

A protective tape is attached to the notch or opening in the bottom face of the case body.

A disc drive unit according to a third aspect of the present invention comprises: a case body including a lower case body having a case bottom face and an upper case body having a case top face; a disc tray capable of holding a disc and moving between a disc driving position where the disc tray is housed in the case body and a disc loading position where the disc tray projects from the case body; functional members provided on the disc tray; a pickup unit having an optical head for recording or reproducing information to or from the disc; a screw shaft which engages the pickup unit and moves the pickup unit; and a lower cover attached to the disc tray so as to be situated between the functional members and the case bottom face, in order to protect the functional members. The pickup unit, the screw shaft, the lower cover constitute a chassis unit, and the chassis unit is provided with a vibration-proof cushion for absorbing vibration generated as the disc is driven. Further, the case body has a notch or opening formed in a position of the case bottom face which faces the functional members when the disc tray is situated in the disc driving position.

According to the disc drive unit of the present invention, the whole unit can be thinned without lowering the performance of the functional members. Further, a shaft of a motor for disc drive can be fixed to a thread chassis with an allowance.

### BRIEF DESCRIPTION OF THE DRAWINGS

FIG. 1 is a perspective view for illustrating a state in which a disc drive unit according to a first embodiment of the present invention is in a disc loading position;
FIG. 2 is a perspective view of the disc drive unit of FIG. 1 taken diagonally from below;
FIG. 3 is a top view for illustrating a state in which the disc drive unit of FIG. 1 is in a disc drive loading position;
FIG. 4 is a perspective view for illustrating the state in which the disc drive unit of FIG. 1 is in the disc drive loading position;
FIG. 5 is a schematic sectional view for illustrating vertical locational relationships among elements that constitute the disc drive unit of FIG. 1;
FIG. 6 is a schematic sectional view for illustrating the way a flexible connecting body (FPC) of the disc drive unit of FIG. 1 bends;
FIG. 7 is a plan view showing an output shaft portion of a thread motor used in a disc drive unit according to a second embodiment of the present invention; and
FIG. 8 is a plan view showing an output shaft portion of a thread motor used in a disc drive unit according to a third embodiment of the present invention.

### BEST MODE FOR CARRYING OUT THE INVENTION

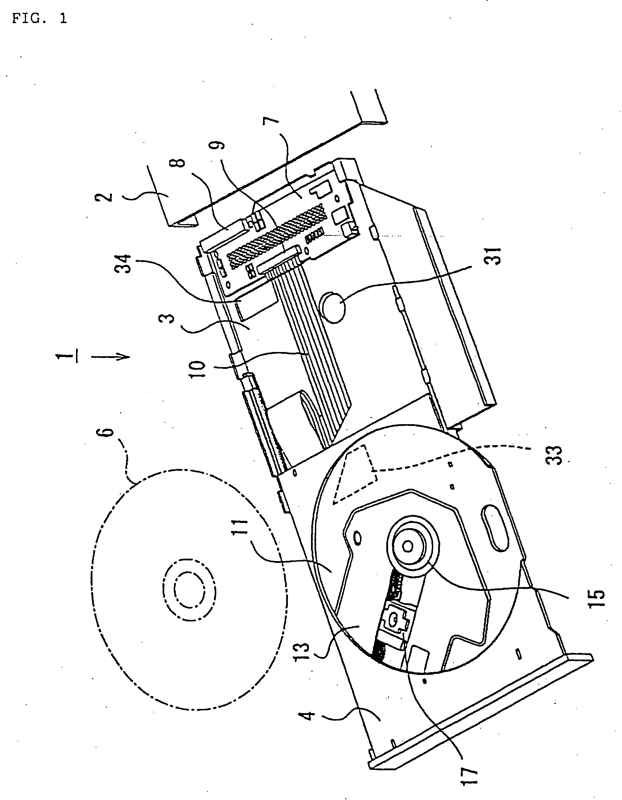

A first embodiment of the present invention will first be described with reference to FIGS. 1 to 6.

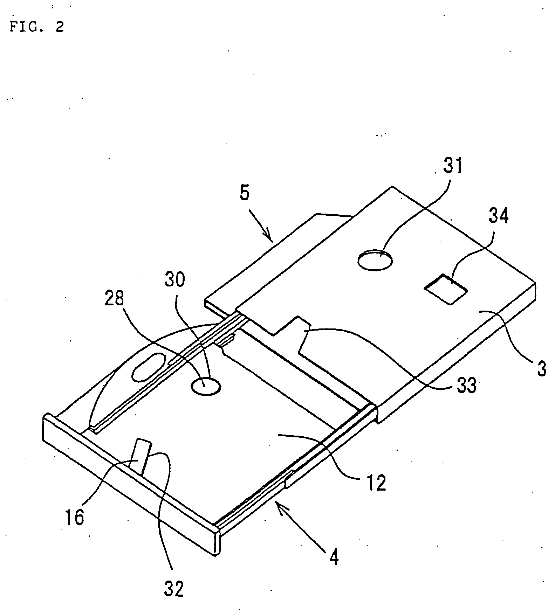

As shown in FIG. 1, a disc drive unit 1 is provided with an upper case body 2, a lower case body 3, and a disc tray 4. The upper case body 2 and the lower case body 3 are combined to form a case body 5 (FIG. 2). The disc tray 4 is removably attached to the case body 5.

FIG. 1 shows a state in which the disc tray 4 is removed from the case body 5. When the disc tray 4 is in this position (disc loading position), the disc 6 can be loaded onto the disc tray 4 or the disc 6 can be removed from the disc tray 4.

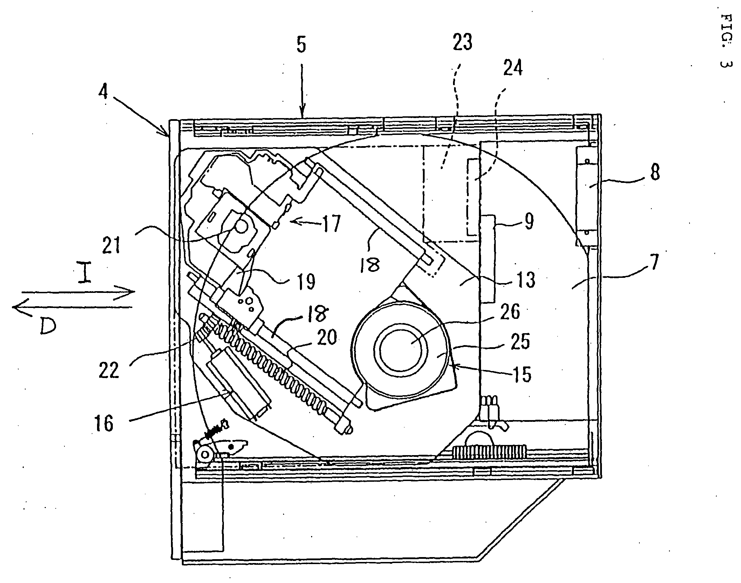

On the other hand, FIG. 3 shows a state in which the disc tray 4 is pushed in the case body 5. When the disc tray 4 is in this position (disc driving position), information is read from the disc 6, or information is written in the disc 6.

In the description to follow, the direction in which the disc tray 4 is pushed in toward the case body 5 (direction indicated by symbol I in FIG. 3) is regarded as forward, and the direction in which the case body 5 is drawn out (direction indicated by symbol D in FIG. 3) as rearward.

The upper case body 2 has a structure as a cover member that covers the lower case body 3, and is formed by press-shaping a sheet material of 0.4-mm thickness into a tray form. The lower case body 3 is also tray-shaped and has left- and right-hand sidewalls and a rear wall. As shown in FIG. 1, moreover, a main circuit board 7 is mounted on a rear part of it. The main circuit board 7 is provided with a connector 8 for connection to a host device (not shown) on its rear end edge and a case-body-side connector 9 on its front end edge, as well as a processing circuit for transmitting and receiving signals and data to and from the host device. One end of an FPC 10 is connected to the case-body-side connector 9.

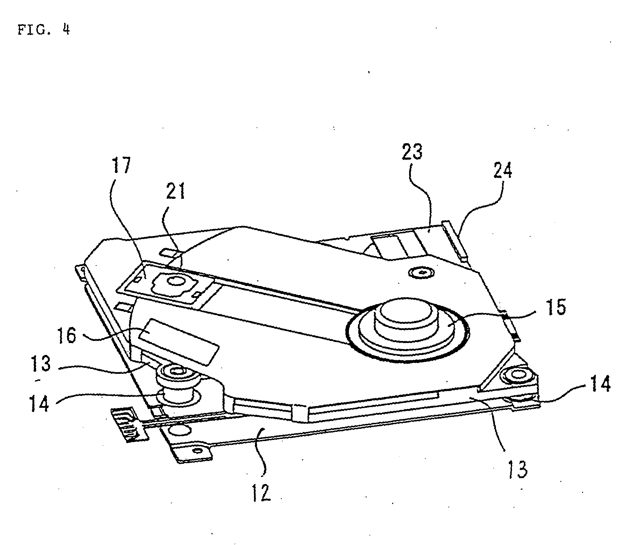

The disc tray 4 is loaded and unloaded back and forth by utilizing a guide rail mechanism that is provided between the disc tray 4 and the left- and right-hand sidewalls of the lower case body 3. A disc recess 11 is formed in the center of the upper surface of the disc tray 4, and a thread chassis 13 that is coupled to a lower cover 12 is attached from the underside. The thread chassis 13 is coupled to the lower cover 12 through three vibration-proof cushions 14 (FIG. 4). A spindle motor 15, a thread motor 16, and a pickup unit 17 are mounted on the thread chassis 13.

The pickup unit 17 is composed of a pickup 19, which is guided by two guide bars 18 that are arranged on the thread chassis 13, and a thread 20 that moves the pickup 19 in the radial direction. The pickup 19 is provided with an optical head 21. In this embodiment, moreover, the screw shaft 20 is connected to the thread motor 16 by a transmission-connection mechanism 22 composed of helical gears.

In FIGS. 3 and 4, numeral 23 denotes a sub-circuit board, which is provided with a circuit that processes signals from the optical head 21, feeds write data, and controls the thread motor 16 and the spindle motor 15, and has a disc-tray-side connector 24. The disc-tray-side connector 24 is connected with the other end of the FPC 10, one of which is connected to the case-body-side connector 9.

When the disc tray 4 is in the disc driving position, as seen from FIG. 3, the spindle motor 15 is situated substantially in the center of the lower case body 3, as viewed in a plan view, while the thread motor 16 and its transmission-connection mechanism 22 is situated on a front edge portion. Further, the case-body-side connector 9 and the disc-tray-side connector 24 are situated close to the front edge of the main circuit board 7.

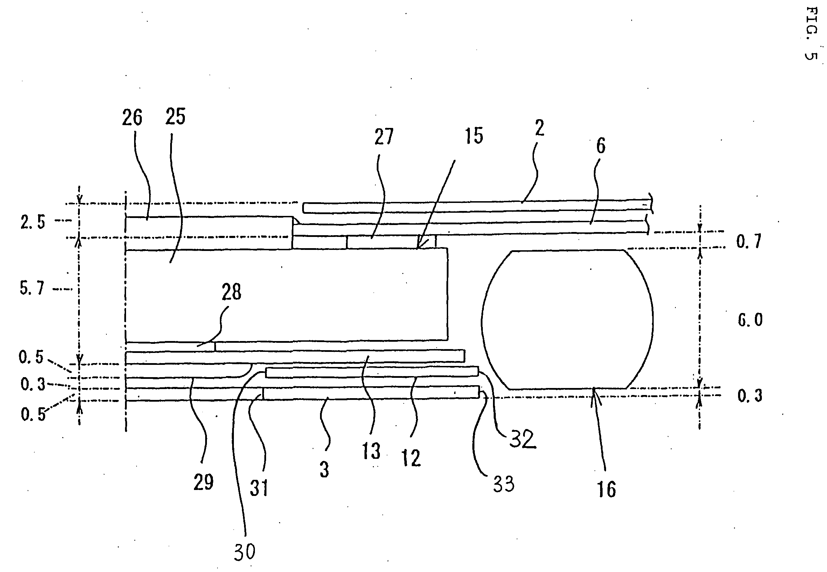

As viewed with respect to the vertical arrangement of elements that constitute the disc drive unit, as shown in FIG. 5, moreover, the spindle motor 15 (8.7 mm in overall height), lower cover 12, and thread motor 16 (6 mm in overall height) are situated between the upper case body 2 (0.4 mm thick) and the lower case body 3 (0.5 mm thick).

The spindle motor 15 has a chuck 26 that protrudes from the center of the upper surface of a turntable 25, and an annular spacer 27 is located around the chuck 26. The spacer 27 has a thickness of 0.7 mm and maintains a space between the lower surface of the disc 6 mounted on the chuck 26 and the upper surface of the turntable 25. A shaft 28 protrudes downward beyond the thread chassis 13 from the center of the lower surface of the spindle motor 15. The spindle motor 15 is fixed to the thread chassis 13 by hammering the projected portion of the shaft 28. A hammered portion 29 has a thickness of 0.3 mm, which is large enough to fix the spindle motor 15 securely. The lower cover 12 (0.5 mm thick) is situated under the thread chassis 13.

For smooth loading and unloading of the disc tray 4 into and from the case body, gaps of about 0.2 mm and 0.3 mm are required between the upper case body 2 and the top face of the chuck 26 and between the lower cover 12 and the lower case body 3, respectively, for example. A gap of about 0.3 mm is formed between the lower surface of the lower cover 12 and the thread chassis 13. As shown in FIG. 5, the upper and lower surfaces of the thread motor 16 are flattened so that its vertical dimension is reduced to 6 mm. In consideration of a swing of the disc 6 in rotation, the upper surface of the thread motor 16 must be situated within the same plane as the upper surface of the turntable 25.

As mentioned before, moreover, the thread chassis 13 is mounted on the lower cover 12 with the vibration-proof cushions 14 between them. As the vibration-proof cushions 14 extend and contract, therefore, the lower end of the shaft 28 of the spindle motor 15 and the lower surface of the thread motor 16 may possibly be shifted to positions below their respective stationary positions (FIG. 5).

Accordingly, a first hole 30 is provided in that position of the lower cover 12 which corresponds to the lower end portion of the shaft 28 of the spindle motor 15 (functional member), whereby the hammered portion 29 of the shaft 28 is allowed to shift its position downward, and a second hole 31 is also formed in a corresponding position of the lower case body 3. However, there is no possibility of the hammered portion 29 slipping out of the second hole 31 and projecting downward from the lower case body 3. If the thread chassis 13 swings when the disc 6 in rotation oscillates, the lower end face of the hammered portion 29 on the lower end of the shaft 28 interferes only slightly with the second hole 31 at the most.

Owing to its vertical dimension and disposition, the thread motor 16 has its lower surface situated below the position of the lower cover 12, so that the lower part of the thread motor 16 is passed through a (rectangular) third hole 32 that is provided in its corresponding portion of the lower cover 12. Further, a notch 33 (FIG. 2) is also provided in a corresponding portion of the lower case body 3 lest the lower part of the thread motor 16 engage the lower case body 3. The shape of the notch 33 is equivalent to a trace of rearward parallel translation of a projected portion of the thread motor 16 from the front edge of the lower case body 3.

If the disc 6 in rotation on the turntable 25 oscillates, the lower surface of the thread motor 16 sometimes may be situated below the upper surface of the lower case body 3. Owing to the elasticity of the vibration-proof cushions 14, however, it can never be lowered below the lower surface of the lower case body 3.

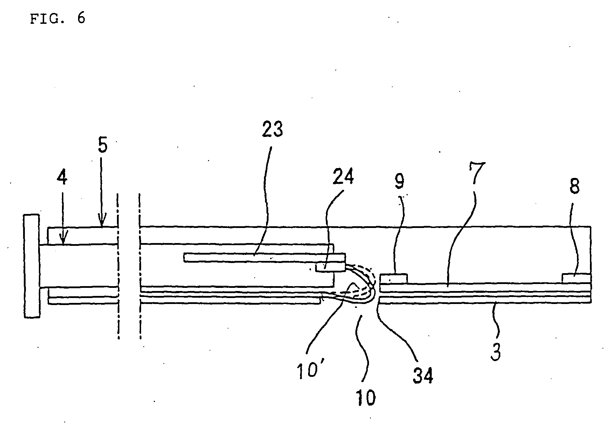

When the disc tray 4 is in the disc driving position, as shown in FIG. 3, the disc-tray-side connector 24 is located close to the main circuit board 7 on the side of the case body 5. As indicated by broken line in FIG. 6, therefore, a bent portion 10' of the FPC 10 having an extremely small diameter is formed on the FPC 10. Since the bent portion 10' of the FPC 10 pushes up the disc-tray-side connector 24 by repulsion, the rear end of the disc tray 4 is somewhat lifted. In order to reduce the upward urging force of the bent portion 10' of the FPC 10 (against the disc tray 4), therefore, the bent portion 10' of the FPC 10 is evacuated to a fourth hole 34 that is provided in a corresponding portion of the lower case body 3 (see full line of FIG. 6).

In consequence, the disc tray 4 never tends to incline in the disc driving position, and the loaded disc 6 can rotate smoothly, so that noise can be prevented from being generated.

According to the arrangement described above, an object to reduce the overall vertical dimension from 12.7 mm to 9.5 mm, that is, by 3.2 mm, can be achieved without changing the vertical dimension of the spindle motor 15 or the thread motor 16, that is, without lowering the performance. However, these specific dimensions are examples according to the embodiment.

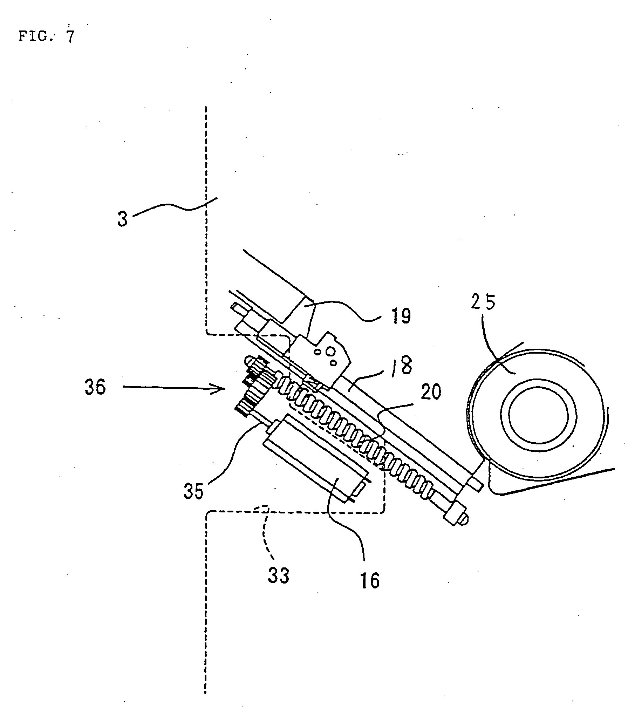

A second embodiment of the present invention will now be described with reference to FIG. 7.

An output shaft 35 of a thread motor 16 and a screw shaft 20 are coupled to each other by a transmission-connection mechanism 22 composed of spur gears. In this case, the diameter of an intermediate reduction gear 36 is increased to enjoy a satisfactory reduction ratio, so that a notch 33 is also previously formed in that part of the lower case body 3 which corresponds to the gear 36. In consequence, dimensional restrictions on the reduction gear 36 can be eased.

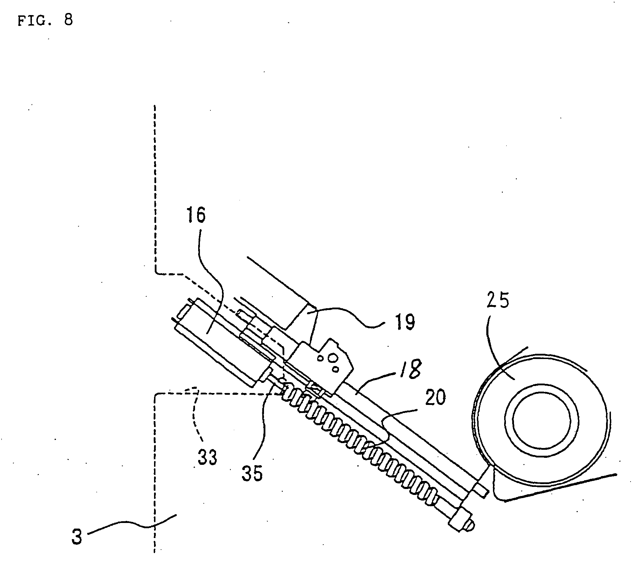

A third embodiment of the present invention will now be described with reference to FIG. 8.

A thread motor 16 is a pulse motor, and its output shaft 35 is coupled to a screw shaft 20. Thus, there is no transmission-connection mechanism between the output shaft 35 and the screw shaft 20, so that the size of a notch to be formed in the front edge of a lower case body 3 can be reduced correspondingly.

Although the spindle motor 15, thread motor 16, and FPC 10 have been described as functional members in connection with the foregoing first to third embodiments, the functional members may be alternative members that constitute the disc drive unit 1.

For better dust protection and appearance, a protective tape may be stuck on the first to fourth holes 30 to 32 and 34 and the notch 33, in some cases.

Further, the illustrated example is configured to have the lower cover 12, and the function members, including the spindle motor 15, thread motor 16, etc., face the lower case body 3 across an opening or notch in the lower cover 12. Alternatively, however, the lower cover 12 may be omitted. In this case, the functional members and the lower cover face directly.

## Claims

1. A disc drive unit comprising:
a case body having at least a bottom face;
a disc tray capable of holding a disc and moving between a disc driving position where the disc tray is housed in the case body and a disc loading position where the disc tray projects from the case body;
functional members provided on the disc tray; and
a lower cover attached to the disc tray so as to be situated between the functional members and the bottom face of the case body, in order to protect the functional members; wherein
the case body has a notch or opening formed in a position of the bottom face thereof which faces the functional members when the disc tray is situated in the disc driving position.

2. The disc drive unit according to claim 1, wherein the lower cover has a notch or opening in that part thereof which faces the functional members.

3. The disc drive unit according to claim 1, which comprises a pickup unit having an optical head for recording or reproducing information to or from the disc, and wherein one of the functional members is a thread motor for sliding the pickup unit in the radial direction of the disc.

4. The disc drive unit according to claim 1, wherein the thread motor is situated in a position corresponding to the front edge portion of the lower case.

5. The disc drive unit according to claim 3 or 4, wherein an output shaft of the thread motor is situated in front of the case body and coupled to a screw shaft for sliding the pickup unit by a transmission-connection mechanism composed of gears, and openings or notches are formed in those positions of the lower cover and the case body which face the transmission-connection mechanism.

6. The disc drive unit according to claim 3, wherein the thread motor is a pulse motor coupled directly to a screw shaft for sliding the pickup unit.

7. The disc drive unit according to claim 1, which comprises a main circuit board attached to the case body, a sub-circuit board attached to the disc tray, and a flexible connecting body for electrically connecting the main circuit board and the sub-circuit board, and wherein the functional member is the flexible connecting body when the disc tray is situated in the disc driving position and a bent portion thereof faces the notch or opening in the bottom face of the case body.

8. The disc drive unit according to claim 7, wherein the flexible connecting body is a flexible printed circuit (FPC) or a flexible flat cable (FFC).

9. A disc drive unit comprising:
a case body having at least a bottom face;
a disc tray capable of holding a disc and moving between a disc driving position where the disc tray is housed in the case body and a disc loading position where the disc tray projects from the case body;
functional members provided on the disc tray;
a lower cover attached to the disc tray so as to be situated between the functional members and the bottom face of the case body, in order to protect the functional members; and
a vibration-proof cushion for absorbing vibration generated as the disc is driven; wherein
the case body has a notch or opening for the evacuation of the functional members which move up and down as the disc oscillates, in that position of the bottom of the case body which faces the functional members.

10. The disc drive unit according to claim 1 or 9, wherein the functional member is a spindle motor for driving the disc.

11. The disc drive unit according to claim 1 or 9, wherein a protective tape is attached to the notch or opening in the bottom face of the case body.

12. A disc drive unit comprising:
a case body including a lower case body having a case bottom face and an upper case body having a case top face;
a disc tray capable of holding a disc and moving between a disc driving position where the disc tray is housed in the case body and a disc loading position where the disc tray projects from the case body;
functional members provided on the disc tray;
a pickup unit having an optical head for recording or reproducing information to or from the disc;
a screw shaft which engages the pickup unit and moves the pickup unit; and
a lower cover attached to the disc tray so as to be situated between the functional members and the case bottom face, in order to protect the functional members; wherein
the pickup unit, the screw shaft, and the lower cover constitute a chassis unit, and the chassis unit is provided with a vibration-proof cushion for absorbing vibration generated as the disc is driven, and
the case body has a notch or opening formed in that position of the case bottom face which faces the functional members when the disc tray is situated in the disc driving position.
